# EUROPEAN PATENT SPECIFICATION

(11) **EP 2 007 109 B1**
(45) Date of publication and mention of the grant of the patent: **22.10.2014**
(21) Application number: 08151609.8
(22) Date of filing: 19.02.2008
(51) Int. Cl.: H04L 29/06, H04L 12/28

(54) **Method of connecting computer to mobile internet service by using mobile terminal**
Verfahren zum Verbinden eines Computers mit einem mobilen Internetdienst unter Verwendung eines mobilen Endgeräts
Procédé pour connecter un ordinateur à un service Internet mobile en utilisant un terminal mobile

(30) Priority: 09.04.2007 KR 20070034627
(43) Date of publication of application: 24.12.2008
(73) Proprietor: Samsung Electronics Co., Ltd., Suwon-si, Gyeonggi-do, 443-742 (KR)
(72) Inventor: Lee, Jong Phil c/o Samsung Electronics Co. Ltd., Gyeonggi-do (KR); Chang, Woo Jin c/o Samsung Electronics Co. Ltd., Gyeonggi-do (KR)
(74) Representative: Grünecker, Kinkeldey, Stockmair & Schwanhäusser

(56) References cited:
- EP-A- 1 178 646
- GB-A- 2 423 895
- US-A1- 2004 076 128

## Description

The present invention relates to a mobile Internet service connection method, and more particularly, to a method of connecting a computer to a mobile Internet service by using a mobile terminal.

A mobile terminal is a portable terminal enabling wireless communication with another device. In particular, a mobile terminal may be a GSM (Global Service for Mobile) terminal and a UMTS (Universal Mobile Telecommunication System) terminal, providing a mobile Internet service by using an SIM (Subscriber Identification Module) card or a USIM (Universal Subscriber Identification Module) card.

With the popularization of mobile terminals, users desire a mobile terminal having various functions including mobile computing, and therefore the mobile terminal is important as an information and telecommunication terminal for connecting through a wireless network. For example, many people carry a notebook computer and enjoy using the Internet while traveling by connecting the notebook computer to a mobile Internet service through a mobile terminal and a wireless LAN (local area network). However, people not having knowledge of a computer may experience difficulties in using the mobile Internet service, because they do not know how to execute a program for connecting a mobile terminal to a wireless LAN and how to change attributes of the program. Further, a user must know information of an SIM card or a USIM card inserted in the mobile terminal to change the attribute of the program, which may be a very complicated process for the user.

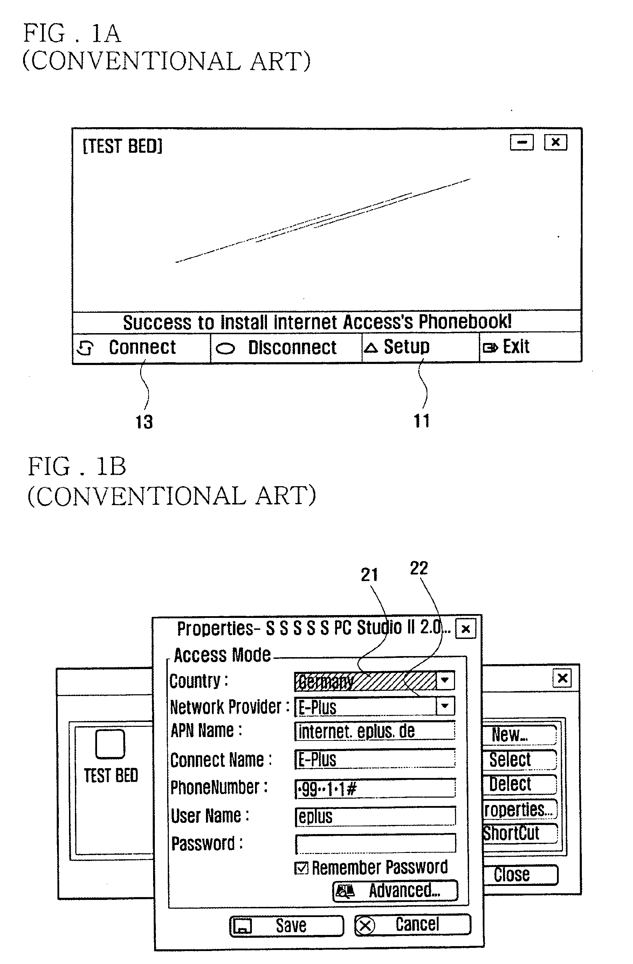

For example, when a program for connecting a mobile terminal to a mobile Internet service is executed, as shown in FIG. 1A, a displayed 'Setup' button 11 is first selected. After selecting the 'Setup' button 11, attributes of an SIM card or a USIM card inserted in the mobile terminal, to which a computer is connected, must be set by selecting a 'Country' 21 and a 'Network Provider' 22, as shown in FIG. 1B. If the country 21 and the network provider 22 are selected, remaining attributes are set automatically. For example, a 'Connect Name' is automatically set to 'E-Plus'. Subsequently, the user may connect the computer to the Internet through the mobile terminal by inputting a 'Connect' button 13.

Therefore, a simple method of connecting a computer to a mobile Internet service by using a mobile terminal demanded for providing user convenience.

GB 2 423 895 A discloses a method of accessing data using a mobile telecommunications device. The mobile telecommunications device is coupled to a data processing apparatus and the data is accessed using the user interface of the data processing apparatus. The data processing apparatus (for example, a PC) includes a phone services agent which controls communications between the mobile telecommunications device and the data processing apparatus. The user interface may be implemented by a web browser.

EP 1 178 646 A discloses a method and system for data transfer between a host device and communication apparatus via a radiocommunication network and also for data transfer between an external communication network outside the radiocommunication network and the communication apparatus. Communication setting information on the external communication network is held in the communication apparatus and used to set a relation of connection between the communication apparatus and external communication network.

US 2004/0076128 A1 discloses a system and method for authentication, authorization and accounting for a plurality of wireless local area networks (WLANs) operated by a plurality of WLAN operators comprising a mobile communications device connecting to a terminal comprising an Internet access application program for accessing the Internet, a personal identification number (PIN) application program, and a unique identifier application program.

It is the object of the present invention, to provide an improved method for connecting a computer to a mobile Internet service by using a mobile terminal.

This object is solved by the subject matter of the independent claim.

Preferred embodiments are defined in the dependent claims.

A method of connecting a computer to a wireless Internet service by using a mobile terminal according to an exemplary embodiment of the present invention includes: determining whether the mobile terminal is connected to the computer; determining, if the mobile terminal is connected to the computer, whether a connection to the mobile Internet service through the mobile terminal is requested; requesting, if a connection to the mobile Internet service through the mobile terminal is requested by the computer, setting information for the connection to the mobile Internet service to the mobile terminal; transmitting the requested setting information from the mobile terminal to the computer; and automatically setting attributes of an application program for connecting the computer to the mobile internet service according to the setting information received by the computer.

According to the present invention, if an application program for connecting a computer to a mobile Internet service by using a mobile terminal is executed, attributes of the application program are set automatically. Therefore, the inconvenience of setting each attribute of an application program may be avoided and a computer may easily be connected to a mobile Internet service by using a mobile terminal.

The object, features and advantages of the present invention will become more apparent from the following detailed description in conjunction with the accompanying drawings, in which:
FIGS. 1A and 1B are display screen examples in a conventional method of connecting a computer to a mobile Internet service by using a mobile terminal according to the prior art;
FIG. 2 is a schematic view showing a physical connection between a mobile terminal and a computer in a method of connecting a computer to a mobile Internet service by using a mobile terminal according to an exemplary embodiment of the present invention;
FIG. 3 is a flow chart showing a method of connecting a computer to a mobile Internet service by using a mobile terminal according to another exemplary embodiment of the present invention;
FIG. 4 is a flow chart showing a process performed by the computer in the method of FIG. 3;
FIG. 5 is a diagram showing a configuration of setting information;
FIG. 6 is a flow chart showing a process performed by the mobile terminal in the method of FIG. 3; and
FIG. 7 is a display screen example of requesting connection to a mobile Internet service in the method of FIG. 3.

Hereinafter, exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring the subject matter of the present invention.

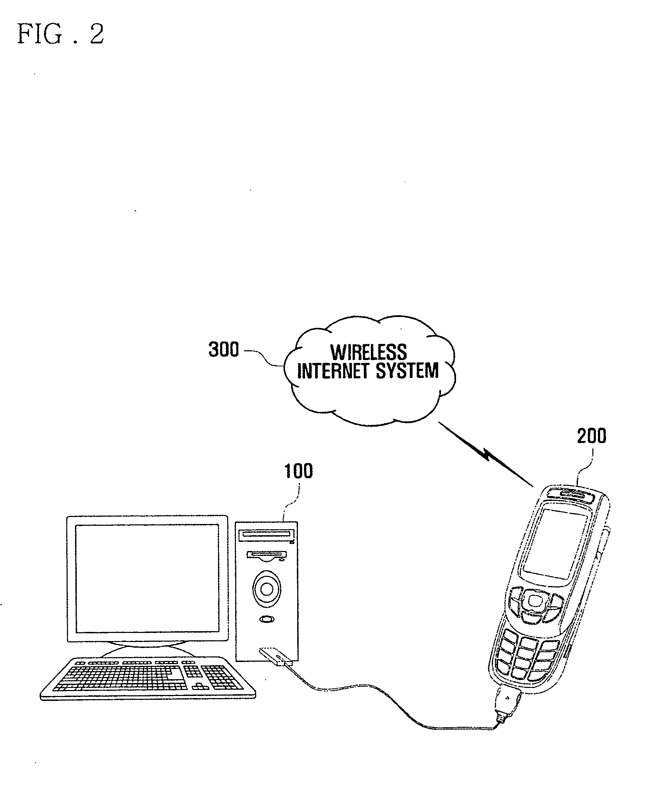

In advance of describing a method of connecting a computer 100 to a mobile Internet service by using a mobile terminal 200 according to the present invention, a physical connection between the computer 100 and the mobile terminal 200 enabling the method to be performed is described referring to FIG. 2.

The mobile terminal 200 is connected to the computer 100 for data communication through a physical connection medium (for example, a data cable), and receives a mobile Internet service through a wireless Internet system 300.

Firstly, the mobile terminal 200 is connected to the computer 100. The computer 100 stores an application program for connecting to a mobile Internet service through the mobile terminal 200. If an execution command of the application program is input, the computer 100 requests the mobile terminal 200 for information for setting attributes of the application program, and sets the attributes of the application program according to the information received from the mobile terminal 200. Subsequently, if a connection to a mobile Internet service is requested, the computer 100 receives the mobile Internet service by connecting to the wireless Internet system 300 through the mobile terminal 200. If data that can be displayed in the computer 100 (for example, an HTML document) is received from the wireless Internet system 300, the mobile terminal 200 transmits the received data directly to the computer 100. However, if data that cannot be displayed in the computer 100 is received from the wireless Internet system 300, the mobile terminal 200 transmits, to the computer 100, a program for converting the received data to data in a format that can be displayed in the computer 100. Accordingly, the computer 100 can display the data (for example, content and web page) received from the wireless Internet system 300 by using the conversion program.

In a state that the mobile terminal 200 is connected to the computer 100, the mobile terminal 200 receives a mobile Internet service from the wireless Internet system 300. If the computer 100 requests information for setting attributes of an application program, the mobile terminal 200 transmits the corresponding information to the computer 100. If the computer 100 requests a connection to a mobile Internet service, the mobile terminal 200 connects the computer 100 to the wireless Internet system 300 for the mobile Internet service. That is, the computer 100 attempts to connect to the wireless Internet system 300 through the mobile terminal 200.

The wireless Internet system 300 provides an environment enabling a user to receive a mobile Internet service by using the mobile terminal 200. For example, an HSDPA (High Speed Downlink Packet Access) system is used for a mobile Internet service using a mobile communication network. The HSDPA system is a 3.5th generation mobile communication system providing a much higher data transmission speed than a 3rd generation mobile communication system, such as a CDMA (Code Division Multiple Access) system and a W-CDMA (Wideband Code Division Multiple Access) system. The HSDPA system can communicate at a 5 times higher speed (a downlink speed of 14.4 Mbps maximum) than the W-CDMA system. Further, the W-CDMA system can be modified to the HSDPA system without high investment in a base station.

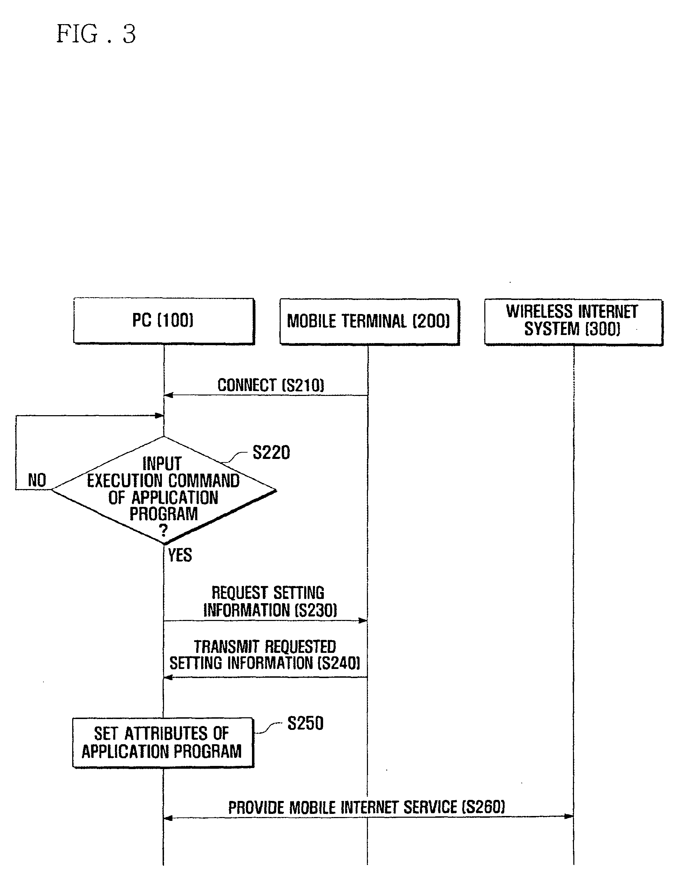

FIG. 3 is a flow chart showing a method of connecting a computer to a mobile Internet service by using a mobile terminal according to another exemplary embodiment of the present invention.

Referring to FIGS. 2 and 3, the mobile terminal 200 is connected to the computer 100 (S210), and the computer 100 determines whether a command for connecting to a mobile Internet service is input (S220). If a command for connecting to a mobile Internet service is input, the computer 100 requests the mobile terminal 200 for information for setting attributes of an application program (S230). The mobile terminal 200 transmits the corresponding information to the computer 100 in response to the request (S240). After receiving the information, the computer 100 sets the attributes of the application program automatically according to the received information (S250). After setting the attributes of the application program, if a connection to a mobile Internet service is requested, the computer 100 connects to the wireless Internet system 300 for the mobile Internet service through the mobile terminal 200 (S260). By setting the attributes of the application program automatically as described above, a user may connect to the Internet conveniently, because the user does not need to set each attribute of the application program.

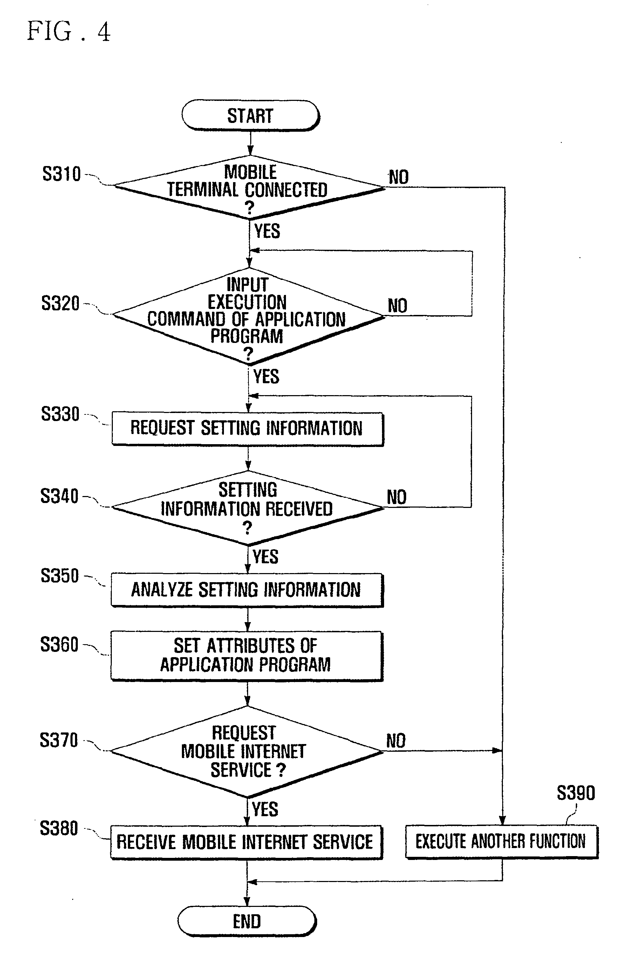

FIG. 4 is a flow chart showing a process performed by the computer 100 in the method of FIG. 3.

Referring to FIGS. 2 and 4, the computer 100 determines whether a mobile terminal is connected (S310). For example, if the mobile terminal 200 is connected to a USB port of the computer 100 through a physical connection medium such as a data cable, the computer 100 determines that the mobile terminal 200 is connected by measuring a voltage change.

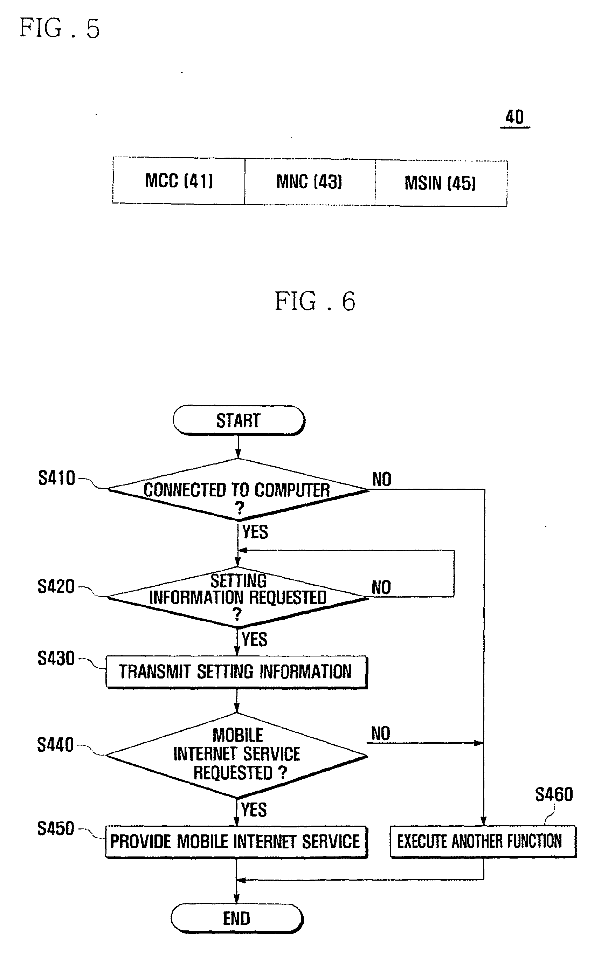

If a mobile terminal is connected to the computer 100, the computer 100 determines whether an execution command of an application program for connecting the computer 100 to the wireless Internet system 300 through the mobile terminal 200 is input (S320). If an execution command of an application program is input, the computer 100 requests setting information by outputting a command for setting attributes of the application program to the mobile terminal 200 (S330). For example, the command for setting attributes of an application program may be an AT+CIMI command, which is a kind of AT command. The AT+CIMI command is a command for retrieving specific identification information of an SIM card or a USIM card storing user authentication information and inserted in the mobile terminal 200. For example, the specific identification information may be an IMSI (international Mobile Subscriber Identity), whose length is limited to 15 bits. In the configuration in FIG. 5, an IMSI 40 is configured with an MCC (Mobile Country Code) 41, MNC (Mobile Network Code) 43, and MSIN (Mobile Subscriber Identification Number) 45. 3 bits are allocated to the MCC 41. 2 or 3 bits are allocated to the MNC 43. 9 or 10 bits are allocated to the MSIN 45. Referring to Tables 1 and 2, in the case that the value of IMSI 40 is '222102200498027', the numerals '222' of MCC 41 represent 'U.S.A' and the numerals'10' of MNC 43 represent 'AAA'. Accordingly, it may be identified that the USIM card or SIM card is manufactured by a company 'AAA' in U.S.A.

**Table 1**

| MCC | Country |
|---|---|
| 111 | Korea |
| 222 | U.S.A |
| 333 | Italy |

**Table 2**

| MNC | Manufacturer |
|---|---|
| 10 | AAA |
| 12 | BBB |
| 13 | CCC |

If the setting information is received from the mobile terminal 200 (S340), the computer 100 obtains specific information for setting attributes of the application program by analyzing the received setting information (S350). For example, the setting information may be an IMSI, and the specific information included in the IMSI may be an MCC and an MNC.

The computer 100 then uses the obtained setting information to automatically set the attributes of the currently executing application program (S360).

When the attributes of the application program are set as described above, connection to a mobile Internet service through the mobile terminal 200 is enabled.

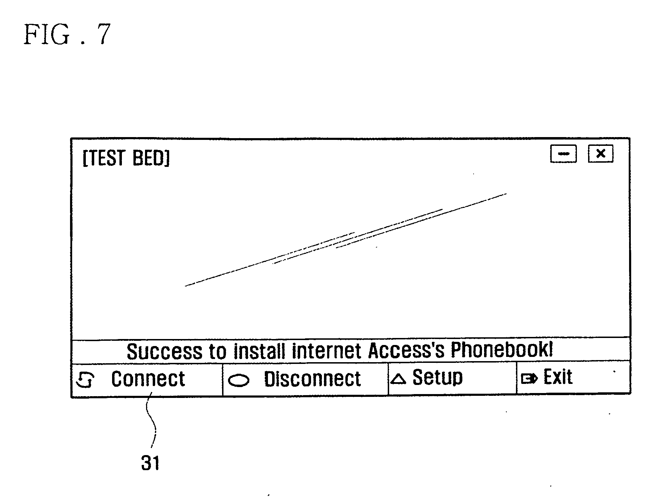

If a connection to a mobile Internet service is requested by the user (S370), the computer 100 receives a mobile Internet service from the wireless Internet system 300 through the mobile terminal 200 (S380). FIG. 7 is a display screen example of requesting connection to a mobile Internet service by the user. As shown in FIG. 7, if a 'Connect' button 31 is input while executing the application program for connecting the computer to the wireless Internet system 300 through the mobile terminal 200, the mobile Internet service may be provided without any setting process.

If a connection to a mobile Internet service is not requested by the user at step S370, or if a mobile terminal is not connected to the computer 100 at step S310, the computer 100 executes another function (S390).

FIG. 6 is a flow chart showing a process performed by the mobile terminal in the method of FIG. 3.

Referring to FIGS. 2 and 6, if the mobile terminal 200 is connected to the computer 100 (S410), the mobile terminal 200 identifies whether information for setting attributes of the application program is requested by the computer 100 (S420). If information for setting attributes of the application program is requested by the computer 100, the mobile terminal 200 transmits the corresponding setting information to the computer 100 (S430). For example, the setting information may be an IMSI. The configuration of the IMSI was previously described in relation to FIG. 3, and therefore is omitted here.

After transmitting the setting information, the mobile terminal 200 identifies whether a mobile Internet service is requested (S440). If a mobile Internet service is requested, the mobile terminal 200 provides the mobile Internet service by receiving data from the wireless Internet system 300 (S450). The mobile terminal 200 stores an application program for converting data or contents received from the wireless Internet system 300 to data in a format that can be displayed in the computer 100. The mobile terminal 200 can thereby convert the data or contents received from the wireless Internet system 300 and transmit the converted data to the computer 100. The mobile terminal 200 can also convert data and contents received from the computer 100, and transmit the converted data to the wireless Internet system 300.

The computer 100 may also store a program for converting data and contents received from the wireless Internet system 300 to data in a format that can be displayed in the computer 100. Therefore, the computer 100 can display the data and contents received from the wireless Internet system 300 by converting the received data and contents. The computer 100 may also convert data and contents to be transmitted to the wireless Internet system 300 through the mobile terminal 200.

If a mobile Internet service is not requested at step S440, or if the mobile terminal 200 is not connected to the computer 100 at step S410, the mobile terminal 200 executes another function.

In this specification, a method of connecting a computer to a mobile Internet service by using an HSDPA system has been disclosed. However, the present invention is not limited thereto, and may be applied to any kind of wireless Internet service (for example, an WiBro Internet service).

According to the present invention, if an application program for connecting a computer to a mobile Internet service by using a mobile terminal is executed, attributes of the application program are set automatically. Therefore, the inconvenience of setting each attribute of an application program may be avoided and a computer may easily be connected to a mobile Internet service by using a mobile terminal.

Although exemplary embodiments of the present invention have been described in detail hereinabove, it should be understood that many variations and modifications of the basic inventive concept herein described, which may appear to those skilled in the art, will still fall within the scope the exemplary embodiments of the present invention as defined in the appended claims.

## Claims

1. A method of connecting a computer (100) to a mobile Internet service by using a mobile terminal (200), comprising:
determining (S310) whether the mobile terminal is connected to the computer;
determining, if the mobile terminal is connected to the computer, whether a connection to the mobile Internet service through the mobile terminal is requested;
requesting (S330), if a connection to the mobile Internet service through the mobile terminal is requested, by the computer, setting information for the connection to the mobile Internet service from the mobile terminal; the setting information being information for identification and for user authentication for connecting the computer to the mobile Internet service, and for setting attributes of an application program for connecting the computer to the mobile Internet service;
transmitting (S430) the requested setting information from the mobile terminal to the computer; and
automatically setting (S250; S360) attributes of the application program for connecting the computer to the mobile Internet service according to the setting information received by the computer.

2. The method of claim 1, wherein determining whether a connection to the mobile Internet service is requested comprises determining by the computer (100) whether an execution command of the application program is input to connect to the mobile Internet service through the mobile terminal (200).

3. The method of claim 2, further comprising providing, if a connection to the mobile Internet service is requested, a mobile Internet service to the computer (100) through the mobile terminal (200).

4. The method of claim 3, wherein the mobile terminal (200) comprises an external memory for storing user authentication information.

5. The method of claim 3 or 4, wherein the external memory is one of an SIM card and a USIM card.

6. The method of one of claims 3 to 5, wherein the setting information is specific identification information of the external memory.

7. The method of one of claims 1 to 6, wherein the setting information comprises a country code (41) and a network provider code.

## Patentansprüche

1. Verfahren zum Verbinden eines Computers (100) mit einem mobilen Internetdienst unter Verwendung eines mobilen Endgeräts (200) mit:
Bestimmen (S310), ob das mobile Endgerät mit dem Computer verbunden ist;
Bestimmen, falls das mobile Endgerät mit dem Computer verbunden ist, ob eine Verbindung mit dem mobilen Internetdienst über das mobile Endgerät angefragt wurde;
Anfragen (S330) mittels des Computers, falls eine Verbindung mit dem mobilen Internetdienst durch das mobile Endgerät angefragt wurde, von Einstellinformationen für die Verbindung mit dem mobilen Internetdienst von dem mobilen Endgerät;
wobei die Einstellinformation Identifizierungsinformation und für die User-Authentifikation für das Verbinden des Computers mit dem mobilen Internetdienst darstellen und Information zum Einstellen von Attributen eines Anwendungsprogramms zum Verbinden des Computers mit dem mobilen Internetdienst ist, darstellen;
Übertragen (S430) der angefragten Einstellinformation von dem mobilen Endgerät an den Computer; und
automatisches Einstellen (S250; S360) von Attributen des Anwendungsprogramms zum Verbinden des Computers mit dem mobilen Internetdienst entsprechend der Einstellinformation, wie sie vom Computer empfangen wurde.

2. Verfahren nach Anspruch 1, wobei das Bestimmen, ob eine Verbindung mit dem mobilen Internetdienst angefragt wurde, das Bestimmen mittels des Computers (100) umfasst, ob ein Ausführungsbefehl für das Anwendungsprogramm zum Verbinden mit dem mobilen Internetdienst über das mobile Endgerät (200) eingegeben worden ist.

3. Verfahren nach Anspruch 2, weiterhin aufweisend das Bereitstellen eines mobilen Internetdienstes (100) über das mobile Endgerät (200), wenn eine Verbindung mit dem mobilen Internetdienst angefragt wurde.

4. Verfahren nach Anspruch 3, wobei das mobile Endgerät (200) einen externen Speicher zum Speichern von Benutzerauthentifizierungsinformationen enthält.

5. Verfahren nach Anspruch 3 oder 4, wobei der externe Speicher entweder eine SIM-Karte oder eine USIM-Karte ist.

6. Verfahren nach einem der Ansprüche 3 bis 5, wobei die Einstellinformation spezifische Identifizierungsinformationen des externen Speichers ist.

7. Verfahren nach einem der Ansprüche 1 bis 6, wobei die Einstellinformation einen Ländercode (41) und einen Netzwerk-Provider-Code umfasst.

## Revendications

1. Procédé de connexion d'un ordinateur (100) à un service Internet mobile en utilisant un terminal mobile (200), le procédé comprenant:
déterminer (S310) si le terminal mobile est connecté à l'ordinateur;
déterminer, si le terminal mobile est connecté à l'ordinateur, si une connexion au service Internet mobile par l'intermédiaire du terminal mobile est demandée;
demander (S330), si une connexion au service Internet mobile est demandée, par l'ordinateur, les informations de réglage pour la connexion au service Internet mobile depuis le terminal mobile; les informations de réglage étant des informations d'identification et d'authentification d'utilisateur pour connecter l'ordinateur au service Internet mobile, et des informations de réglage d'attributs d'un programme d'application pour connecter l'ordinateur au service Internet mobile;
transmettre (S430) les informations de configuration demandées du terminal mobile à l'ordinateur; et
régler automatiquement (S250 ; S360) les attributs du programme d'application pour connecter l'ordinateur au service Internet mobile selon les informations de réglage reçues par l'ordinateur.

2. Procédé selon la revendication 1, dans lequel la determination de si une connexion au service Internet mobile est demandée comprend la détermination par l'ordinateur (100) si une commande d'exécution du programme d'application est entrée pour se connecter au service Internet mobile par l'intermédiaire du terminal mobile (200).

3. Procédé selon la revendication 2, comprenant également, la fourniture, si une connexion au service Internet mobile est demandée, d'un service Internet mobile à l'ordinateur (100) par l'intermédiaire du terminal mobile (200).

4. Procédé selon la revendication 3, dans lequel le terminal mobile (200) comprend une mémoire externe pour stocker des informations d'authentification d'utilisateur.

5. Procédé selon la revendication 3 ou 4, dans lequel la mémoire externe est l'un d'une carte SIM et une carte USIM.

6. Procédé selon l'une des revendications 3 à 5, dans lequel les informations de réglage sont des informations d'identification particulières de la mémoire externe.

7. Procédé selon l'une des revendications 1 à 6, dans lequel les informations de réglage comprennent un code pays (41) et un code de fournisseur de réseau.
